# EUROPEAN PATENT APPLICATION

(11) **EP 1 479 957 A1**
(43) Date of publication of application: **24.11.2004**
(21) Application number: 03380121.8
(22) Date of filing: 20.05.2003
(51) Int. Cl.: F16K 35/06

(54) **Anti-fraud locking system for valves**

(71) Applicant: Valvulas Arco, S.L., 46134 Foyos (Valencia) (ES)
(72) Inventor: Ferrer Beltran, José Ma, 46134 Foyos, Valencia (ES)
(74) Representative: Canadell-Isern, Roberto

(57) **Abstract**

The object of this Patent is an "Anti-fraud locking system for valves", whose main use is made explicit in the title of the invention.

The means by which the control lever (2) is attached to the plug's shaft are:
- A nut (6) that is internally divided into a transverse plane, with the lower part threaded for fastening to the shaft (8) of the plug, and grooves (9) in the upper part, matching ridges (10) in the valve-operating tool (5).
- A cylindrical casing (11) fitted coaxially with the nut (6), which it enshrouds though with no contact between their facing surfaces, the casing having an opening (12) at its base with a diameter that is slightly greater than lower diameter (7) of the nut (6), such that it is the nut (6) that presses on the control lever (2) to join it with the shaft (8), the casing (11) being left free to revolve.

## Description

### OBJECT

The object to which the invention protected in this Patent refers is an "Anti-fraud locking system for valves", preferably for application to valves that serve to cut off fluid flow.

### BACKGROUND

The specific purpose of the invention ("anti-fraud"), which appears explicitly in the definition of its object, reveals the preferential application of said object in fluid-distribution networks (water, gas) in which elementary prudence and economic considerations demand that the pipes and control devices provided cannot be tampered with, so that non-authorised personnel cannot operate the valves that cut off the flow of fluid in the network.

The invention claimed in this Patent refers to this latter security factor.

For the reasons given, it is understandable that fluid-distribution concessionaire companies have attempted to ensure to the greatest extent that a section of the piping can be cut off if required (for example, on account of fluid leakage or for the authorised suspension of a supply arrangement due to non-payment of previous supplies), by locking the valves that cut off the passage of the fluid when they are in their closed position.

This provision is often limited to locking the valve in its closed position by fitting a seal on it, though this method only shows whether the valve has been tampered with after the fitting of the seal, but does not actually prevent such tampering.

In another type of known locking system, the valve can only be operated through the use of a special tool, which is only made available to the authorised staff of the distribution company. This measure may be made effective by various means.

### DESCRIPTION OF THE INVENTION

The invention object of this Patent involves the kind of locking that is assured by the restricted availability of the special tool required for operating the valves.

As in other known valve-locking systems, the one claimed in this Patent is preferentially applicable to those which have three protruding stop-lugs on the outside upper surface of the collar, two of these stop-lugs being arranged at an angle of 90° to each other to prevent the control lever and the plug from being turned beyond the fluid-flow fully-open and fully-closed positions, for which purpose the control element, which can be arranged in any known form (a lever, wing nut or carriage key), has a protrusion which is parallel to the axis of valve's collar and positioned between the two orthogonal stop-lugs, the protrusion's advance being obstructed by these stop-lugs when the valve reaches its fully-open and fully-closed positions.

The third stop-lug is positioned diametrically opposite the closing-lug, while the opening lug is prolonged in the direction opposite its working face to give a gap between this prolongation and the third stop-lug that is equal to the width of the control-lever's protrusion.

With this arrangement, for the known locking system to be operative, the control lever is extracted from its usage position and fitted again in such a way that its protrusion is inserted between the prolongation of the opening stop-lug and the third stop-lug, it being immobilised in this position by the dimensional fit of said protrusion in the gap provided for housing it.

The efficacy of the locking depends on it being impossible for non-authorised personnel to remove the control lever; hence the essence of this patent lies in the creation and provision of means that prevent such removal by persons other than authorised personnel.

The locking system of this invention may also be applied to valves that have only two protruding stop-lugs on the outside surface of the top of the collar set at an angle of 90° to each other, in which case it is the control lever that has three protrusions acting in a manner similar to that explained above.

As previously explained, the efficacy of the locking is assured by the restricted availability of the special tool needed to operate the valves; and the operability of that tool is based on the special formal and functional characteristics of the means of attachment of the control lever, whose structure is as follows:
- A special nut for attaching the control lever to the shaft, the nut externally having a cylindrical shape, with a small reduction in its diameter on the end applied to the control lever, and internally being divided into two parts along a transverse plane, the part nearest the control being threaded for attachment to the upper end of the plug's shaft, while the upper part has longitudinal grooves inside, shaped and arranged in any manner provided that they match, in size and position, the longitudinal ridges arranged on the end of the tool for operating the nut, and that they are not the same as any standard configuration.

By way of non-restrictive example for the purposes of illustration, a solution is shown in the drawings pages based on semi-cylindrical longitudinal grooves in the nut, featuring varying diameters and an irregular arrangement.
- A cylindrical casing, designed to fit coaxially over the special nut to provide outer protection for it, for which purpose its inside diameter is slightly greater than the outside of said nut, so that even though the surfaces cannot meet, neither can any pressure-exerting object be inserted between them to bring them together and enable the nut to be operated; while on the end that is applied on the control lever there is a circular opening whose diameter is smaller than the interior of the casing but slightly greater than the reduction in the nut, so that the latter presses on the control lever through the opening to join it with the shaft, though without immobilising the casing, which remains free to revolve.

The material of which the casing is made must be hard enough and its wall thick enough to prevent deformation by external compression, to prevent it joining up with the nut, which would facilitate their disassembly and the removal of the control, thereby rendering the locking inoperative.

### BRIEF DESCRIPTION OF THE DRAWINGS

To complement this description of the invention and to facilitate understanding of the formal, structural and functional characteristics of its object, drawings are attached, schematically showing various aspects of a preferred embodiment of the "Anti-fraud locking system for valves" that is the object of this invention. In these drawings:

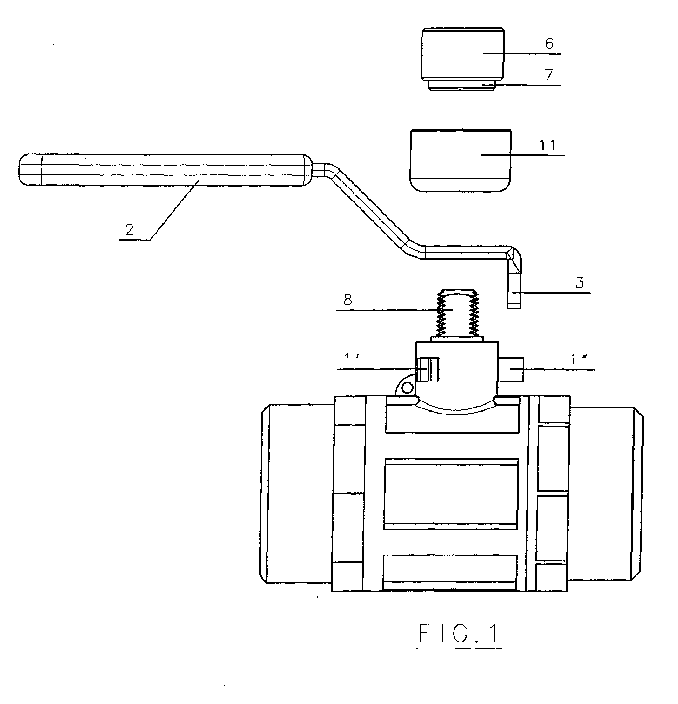

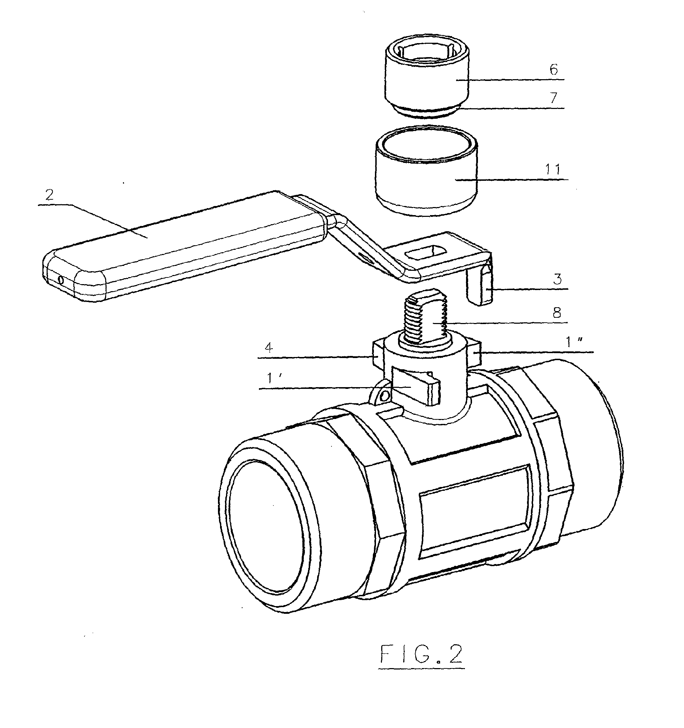

Figure 1 shows a side elevation view of an exploded diagram of the structural elements that make up the system claimed and that are involved in its operation, while Figure 2 shows a perspective view of the same exploded diagram.

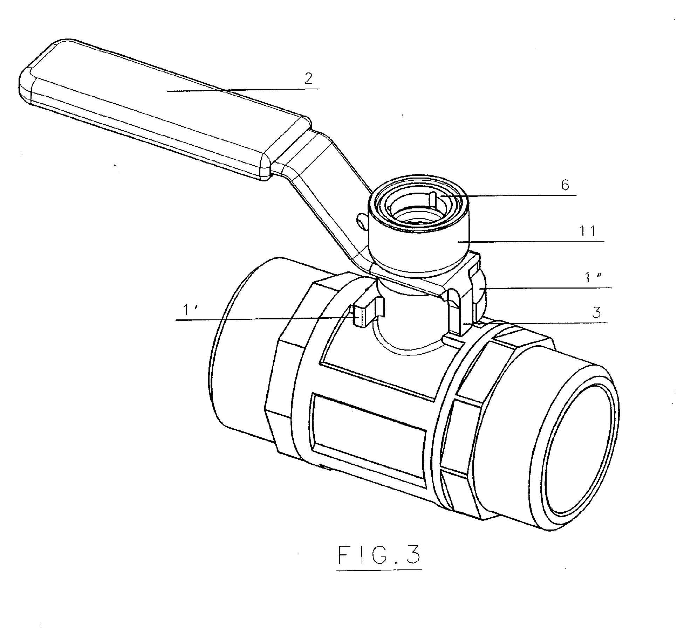

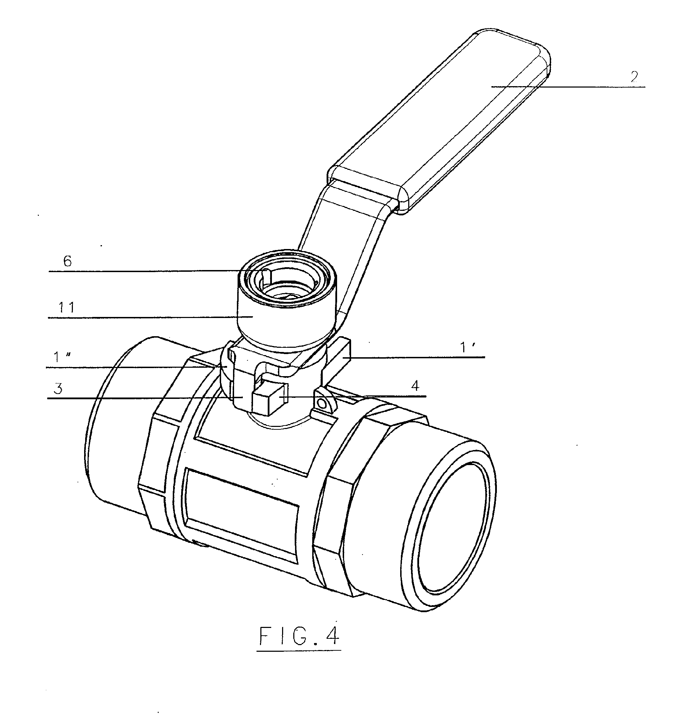

Figure 3 is a perspective view of the assembled valve in its fully-open position for the passage of its fluid; and Figure 4 shows the same valve in its closed-and-locked position.

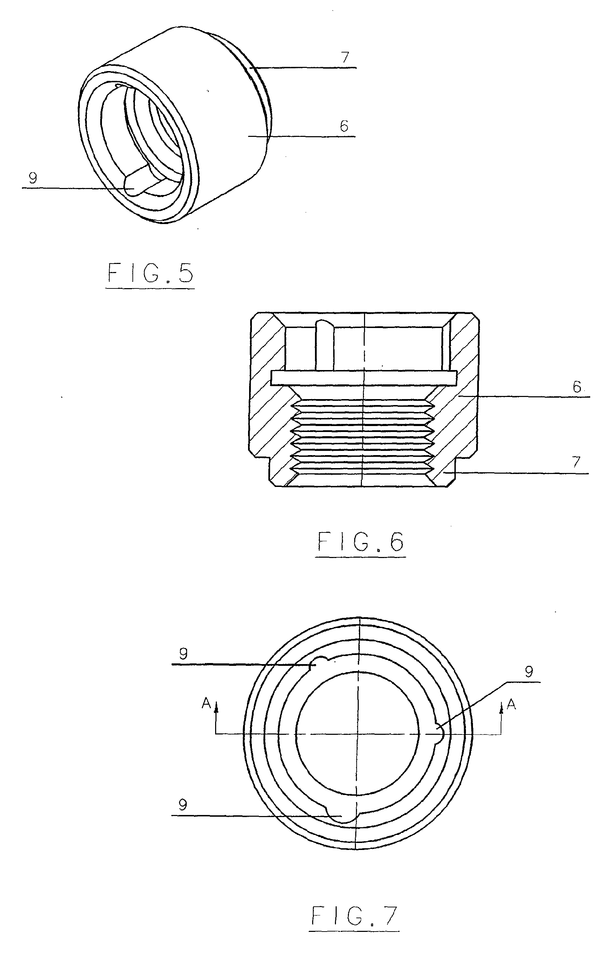

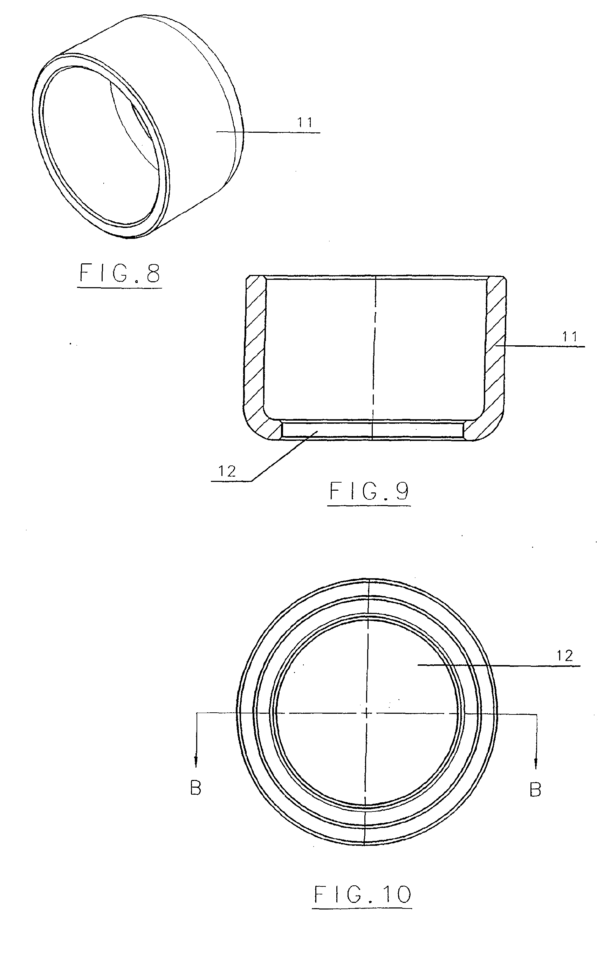

Figure 5 is a perspective view of the special nut; Figure 6, a cross-section of it made along the axial plane marked A-A in Figure 7, which is a plan view of that nut.
Figure 8 is a perspective view of the casing, and Figure 9 a cross-section of it made along the axial plane marked as B-B in Figure 10, which is a plan view of that casing.

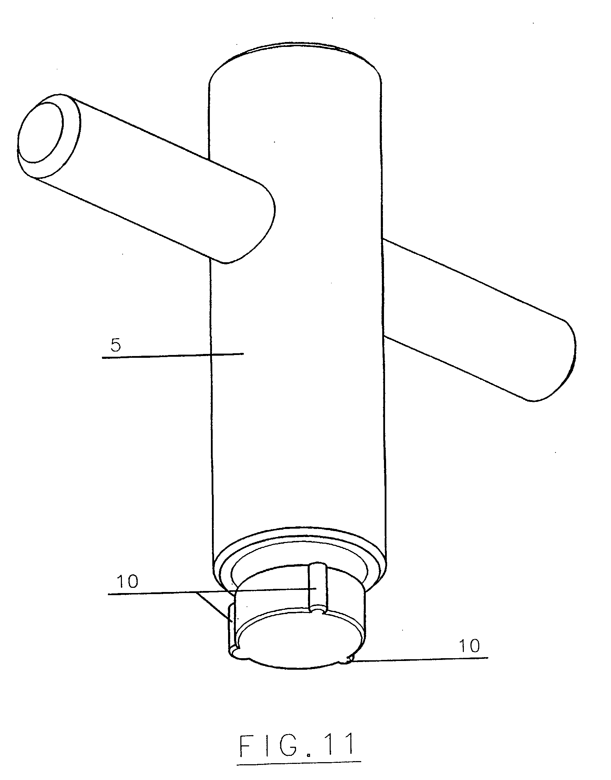

Figure 11 is a perspective view of the special tool, which thanks to its exclusive design is the only one enabling the locking nut to be operated.

### DESCRIPTION OF A PREFERRED EMBODIMENT

To make clear the nature and scope of the advantageous application of the "Anti-fraud locking system for valves" of this invention, a description is now provided of the structure of the means that make it possible and of the way they work, reference being made to the drawings which, since they show a preferred embodiment of this invention for information purposes, are to be interpreted in the broadest manner and not to be taken as restricting the application and content of the invention claimed.

As in other known valve locking systems, the system claimed in this Patent is preferentially applicable to those which have three protruding stop-lugs on the outside upper surface of the collar, two of these stop-lugs (1) being arranged at an angle of 90° to each other to prevent the control lever and the plug from being turned beyond the fluid-flow fully-open and fully-closed positions, for which purpose the control element (2), which can be arranged in any known form (a lever, wing nut or carriage key), has a protrusion (3) bent parallel to the axis of the valve's collar and positioned between the two orthogonal stop-lugs (1), the protrusion's advance being obstructed by these stop-lugs when the valve reaches its fully-open and fully-closed positions.

The third stop-lug (4), which is the locking lug, is positioned diametrically opposite the closing-lug (1'), while the opening lug (1'') is prolonged in the direction opposite its working face to leave a gap between this prolongation and the third stop-lug (4) that is equal to the width of the control-lever's protrusion (3).

With this arrangement, for the known locking system to be operative, the control lever (2) is removed from its usage position and refitted in such a way that its protrusion (3) is inserted between the prolongation of the opening stop-lug (1'') and the third stop-lug (4), it being immobilised in this position by the dimensional fit of said protrusion (3) in the gap provided for housing it.

The efficacy of the locking depends on it being impossible for non-authorised personnel to remove the control lever (2); hence the essence of this patent lies in the creation and provision of means that prevent such removal by persons other than authorised personnel.

As previously explained, the efficacy of the locking is assured by the restricted availability of the special tool needed to operate the valves; and the operability of that tool (5) is based on the special formal and functional characteristics of the means of attachment of the control lever (2), whose structure is as follows:
- A special nut (6) for attaching the control lever (2) to the shaft, the nut externally having a cylindrical shape, with a small reduction in its diameter (7) on the end applied to the control lever, and internally being divided into two parts along a transverse plane, the part nearest the control being threaded for attachment to the upper end (8) of the plug's shaft, while the upper part has longitudinal grooves (9) inside, shaped and arranged in any manner provided that they match, in size and position, the longitudinal ridges (10) arranged on the end of the tool (5) for operating the nut (6), and that they are not the same as any standard configuration.

By way of a non-restrictive example for the purposes of illustration, a solution is shown in the drawings pages based on semi-cylindrical longitudinal grooves in the nut, featuring varying diameters and an irregular arrangement.
- A cylindrical casing (11), designed to fit coaxially over the special nut (6) to provide outer protection for it, for which purpose its inside diameter is slightly greater than the outside diameter of said nut, so that even though the surfaces cannot meet, neither can any pressure-exerting object be inserted between them to bring them together and enable the nut to be operated; while on the end that is applied on the control lever there is a circular opening (12) whose diameter is smaller than the interior of the casing (11) but slightly greater than the reduction (7) in the nut (6), so that the latter presses on the control lever (2) through the opening (12) to join up with the shaft (8), though without immobilising the casing (11), which remains free to revolve.

The material of which the casing (11) is made must be sufficiently hard and its wall sufficiently thick to prevent deformation by external compression, to prevent it joining up with the nut (6), which would facilitate their disassembly and the removal of the control, thereby rendering the locking inoperative.

## Claims

1. Anti-fraud locking system for valves, preferentially applicable to those which have three protruding stop-lugs on the outside upper surface of the collar, two of these stop-lugs (1') - (1") being arranged at an angle of 90° to each other, and a control lever (2) with a protrusion (3) set parallel to the valve's collar and positioned between the two orthogonal stop-lugs, the protrusion's advance being obstructed by these stop-lugs when the valve reaches its fully-open and fully-closed positions, whilst the third stop-lug (4) is positioned diametrically opposite the closing-lug (1'), and the opening lug (1'') is prolonged in the direction opposite its working face to leave a gap between this prolongation and the third stop-lug (4) that is equal to the width of the control-lever's protrusion (3), the system claimed being **characterised in that** the structure of the means of attachment of the control lever (2) on the plug's shaft comprises the following elements: a special nut (6) for attaching the control lever (2) to the shaft, the nut externally having a cylindrical shape, with a small reduction in its diameter (7) on the end applied to the control lever, and internally being divided into two parts along a transverse plane, the part nearest the control being threaded for attachment to the upper end (8) of the plug's shaft, while the upper part has longitudinal grooves (9) inside, shaped and arranged in any manner provided that they match, in size and position, the longitudinal ridges (10) arranged on the end of the tool (5) for operating the nut (6), and that they are not the same as any standard configuration; a cylindrical casing (11), designed to fit coaxially over the special nut (6) to provide outer protection for it, for which purpose its inside diameter is slightly greater than the diameter of the outside of said nut, so that even though the surfaces cannot meet, neither can any pressure-exerting object be inserted between them to bring them together and enable the nut to be operated; while on the end that is applied on the control lever there is a circular opening (12) whose diameter is smaller than the interior of the casing (11) but slightly greater than the reduction (7) in the nut (6), so that the latter presses on the control lever (2) through the opening (12) to join up with the shaft (8), though without immobilising the casing (11), which remains free to revolve; and **in that** the material of which the casing (11) is made must be sufficiently hard and its walls sufficiently thick to prevent deformation by external compression, to prevent it joining up with the nut (6), which would facilitate their disassembly and the removal of the control, thereby rendering the locking inoperative.
